# EUROPEAN PATENT APPLICATION

(11) **EP 3 766 605 A1**
(43) Date of publication of application: **20.01.2021**
(21) Application number: 19186499.0
(22) Date of filing: 16.07.2019
(51) Int. Cl.: B22F 3/105, B29C 64/153, B29C 64/205, B33Y 30/00, B33Y 40/00, B65D 88/26, B65D 88/68, B22F 3/00, B29C 64/343

(54) **POWDER DISPENSING APPARATUS**

(71) Applicant: Sandvik Machining Solutions AB, 811 81 Sandviken (SE)
(72) Inventor: BOSTRÖM, Magnus, 811 35 Sandviken (SE); VIKLUND, Per, 821 98 Rengsjö (SE)
(74) Representative: Sandvik

(57) **Abstract**

The present invention relates to a powder dispensing apparatus for an additive manufacturing system, comprising a container (1), which comprises an upper opening (3) for introducing powder; a bottom in form of an elongated roller (5), wherein the roller (5) is rotatable around a central rotation axis (6) that extends in a longitudinal direction, and wherein the roller (5), in a main section (7) thereof, has an outer surface comprising a single or several cavities (8, 26) distributed therein for receiving and holding powder; and a first and a second side wall (13, 14) extending upwards from the roller (5) along the main section. The apparatus further comprises an elongated scraping device (16) extending in the longitudinal direction beside the roller (5) and below a lower edge of the first side wall (13), wherein the scraping device (16) is arranged to contact the outer surface of the roller (5) along the main section and, when the roller (5) is rotated, to slide into and out of the single or several cavities (8, 26) and thereby scrape the inside of the single or several cavities (8, 26) and remove any powder therefrom.

## Description

### Technical field

The present invention relates to a powder dispensing apparatus for an additive manufacturing system.

### Background

In additive manufacturing, three-dimensional objects are produced by dispensing and levelling a powdered material on a surface and, in relevant positions, bonding particles of the dispensed powder together. For example, in powder bed additive manufacturing, three dimensional objects are produced by spreading layer after layer of a powdered material on a surface and bonding together particles of consecutive layers and particles within the layers. Different bonding methods can be suitable for bonding different types of powdered material and powders with different particle sizes.

An example of a powder bed additive manufacturing method is a binder jetting 3D printing technique. This method can be used for 3D printing objects such as cutting tools, including tool bodies and cutting inserts, of metal or cemented carbide. The method comprises spreading a powder on a surface, one layer at a time. A printing head travels over each layer and deposits a binding adhesive agent in selected positions on the layer using an inkjet-like process. In the selected positions, the particles of the powder are soaked in the binding agent and thereby bonded to surrounding powder particles and to particles in layers below. This is repeated until every layer has been printed. Then, possibly after a curing step, surplus powder is removed, and a green body is uncovered. Finally, the green body is sintered, and the object is obtained.

In this method, it is desired to use a fine particle size powder, for example a so called MIM powder (Metal Injection Moulding powder). Such powders are advantageous for use in green bodies that are to be sintered to high relative density. Fine particle sized metal powder generally has a higher sintering activity than powders comprised of the same metal but with larger sized particles. Therefore, green bodies of such fine particle sized metal powder, after sintering, produce objects with less porosity. However, fine particle sized metal powder that is suitable for sintering, such as for example MIM powder, often has very low flowability and a relatively high adhesiveness, which makes it difficult to dispense.

In prior art powder bed additive manufacturing methods using fine particle sized metal powder, it is known to dispense powder onto a print surface by using a so-called push feed method. When a layer has been finished printing, the print surface is lowered and a platform with stored powder, which is located adjacent to the print surface, is raised. A levelling device is moved across the raised platform so that a layer of powder is removed and collected in front of the levelling device. The levelling device is then moved to continue to push the collected powder onto and across the lowered print surface. Therein powder slips under the levelling device and forms a fresh layer for the next printing step. A problem with this method is that it is difficult to predict the exact amount of powder pushed onto and across the print surface. It can also be time consuming and cumbersome to spread the powder over the surface in order to form a layer with consistent degree of compaction. This can result in production of an inhomogeneous green body, which in turn may cause also inhomogeneous shrinkage in the sintered object.

### Summary

It is an object of the present invention to at least partly obviate the above-mentioned problems and to provide a powder dispensing apparatus for an additive manufacturing by means of which layers of powder with low flowability can be dispensed more evenly. This object is achieved according to the invention by means of a powder dispensing apparatus for an additive manufacturing system as defined in claim 1.

Thus, a powder dispensing apparatus for an additive manufacturing system is provided, which comprises a container. The container comprises
- an upper opening for introducing powder,
- a bottom in form of an elongated roller, wherein the roller is rotatable around a central rotation axis that extends in a longitudinal direction, and wherein the roller, in a main section thereof, has an outer surface comprising a single or several cavities distributed therein for receiving and holding powder, and
- a first and a second side wall extending upwards from the roller along the main section.

The apparatus further comprises an elongated scraping device extending in the longitudinal direction beside the roller and below a lower edge of the first side wall, wherein the scraping device is arranged to contact the outer surface of the roller along the main section and, when the roller is rotated, to slide into and out of the single or several cavities and thereby scrape the inside of the single or several cavities and remove any powder therefrom.

A powder with low flowability, such as fine particle size powder for printing green bodies for metal or cemented carbide components, can be inserted into the container, where it, due to gravity, falls down on the roller and fills the single or several cavities. When the roller is rotated, such powder will, due to its low flowability, remain stuck in the single or several cavities and be transported by the roller past the lower edge of the side wall to the outside of the container. Thanks to the elongated scraping device, which extends in the longitudinal direction beside the roller and below the lower edge of the first side wall, the powder is scraped out from the single or several cavities and thereby made to fall down on a surface below. The number and dimensions of the cavities, especially the dimensions of a single cavity, and the speed of rotation of the roller, can be designed and calibrated to dispense a determined amount of powder in determined positions on the surface. Thereby, advantageously, also powder with low flowability can be dispensed in controlled amounts in desired positions on a surface.

By in addition synchronizing a relative movement between the dispensing apparatus and the surface, the powder can be dispensed in selected positions distributed over the surface. Thereby it will be easier and less time consuming to spread the powder to a layer of consistent thickness and degree of compaction. Thereby, advantageously the quality of printed green bodies and sintered object can be improved.

Herein, terms like top, bottom, above, below are used with reference to when the powder dispensing apparatus is operated for dispensing powder on a horizontal surface.

The powder dispensing apparatus is suitable for use in an additive manufacturing system. The system can be used in a method including building green bodies of a fine particle size powder, and subsequent sintering of the green bodies to form objects. The objects provided by the system can be for example cutting tools or parts thereof, such as tool bodies or cutting inserts, and can comprise for example metal or cemented carbide.

An example of a fine-grained powder with low flowability is a metal powder, such as a MIM powder, with a particle-size distribution that has a mass-median-diameter (MMD) of D₅₀ in the range of 10 - 50 µm. The dispensing apparatus is especially suitable for such fine particle size powder with low flowability having D₅₀ in the range of 2 - 20 µm.

The roller can be rotatable journaled in bearings at each end or around a central axle. The roller can be connectable to a torque source for rotating the roller around its central rotation axis.

The rotation axis of the roller defines a longitudinal direction for components of the dispensing apparatus. Axes extending in the longitudinal direction are aligned with or parallel with the rotation axis of the roller.

The roller can be an element having a general overall shape of a cylinder. The roller can have a constant maximal outer diameter over at least a major part of its length, or at least in the main section. The maximal outer diameter of the roller in the main section can for example be at least 10 mm and at most 100 mm.

The main section of the roller is the section which has an outer surface comprising the single or several cavities for receiving powder and with which the scraping device cooperates for removing powder. In other words, the single cavity is distributed/extends longitudinally at least along the entire main section, or, the several cavities are distributed longitudinally at least along the entire main section, wherein the circumferential extension/position of the single or several cavities may vary. The roller can comprise other sections, such as end sections for being held in bearings and/or sections for connecting the roller to a torque source. A section is to be understood as an entire part of the roller between two longitudinal positions. Thus, the main section can extend over a part of the total length of the roller or over the entire length of the roller.

The single or several cavities can have any shape or extension that allows the scraping device to slide into and out of them and that is suitable for catching powder therein. Thus, the outer surface of the main section has a varying radius in cross sections comprising a cavity. Or, in other words, the cavities have a limited extension in the circumferential direction, i.e. they do not extend around the entire circumference with the same depth. This enhances the ability to catch powder in the cavities, for example in that powder is sheared off a powder pile in the container.

The scarping device can extend beside the roller at any side of the roller while being below the lower edge of the first side wall. Thus, the scarping device can be located on either side or below the roller.

Preferably, the scraping device is configured to contact the outer surface by pressing against the outer surface. Thereby, it is advantageously ensured that the scraping device is properly pushed into the cavities when the roller is rotated. Preferably, the scraping device is arranged to press against and follow the contour of the cavities as the roller rotates. Generally, when the roller is rotated, the scraping device slides into the cavities and pushes any powder therein along against the direction of rotation and out of the cavities. Preferably, the cavities have a continuous inside surface. If the scraping device is arranged to press against the outer surface and to follow the contour of the cavities, i.e. to press against and to slide over the inside surface of the cavities, the risk that the scraping device loses contact with the inside surface and that powder slips under the scraping device is reduced. Consequently, it can be ensured that all, or at least most, of the powder is removed from the cavity by the scraping device.

The scraping device can be configured to contact the outer surface with pressure in any suitable way. For example, the scraping device can comprise at least one resilient element for inherently pressing against the outer surface, or, the powder dispensing apparatus can further comprise a biasing mechanism for causing the scraping device to press against the outer surface. It is also possible to combine these two embodiments, so that the at least one resilient element is arranged to be pressed against the outer surface by means of a biasing mechanism.

Examples of the at least one resilient element for inherently pressing against the outer surface are resilient straws of a brush, broader resilient strips or teeth, or a single resilient blade. The resilient elements can comprise metal or a suitable polymer material. In embodiments, the at least one resilient element is at one end attached in a fixed position in the apparatus, wherein the other end resiliently flexes into and out of the cavities. The pressing force is inherent to the at least one resilient element.

Examples of a biasing mechanism is a spring, for example a helical spring, or a block of elastic material such as rubber, polymer, or foam. The scraping device can be attached to the biasing mechanism at one end so that its other end is biased to contact the outer surface of the main section.

In embodiments, the biasing mechanism can comprise a weight that via a lever presses the scraping device against the outer surface of the main section. This is advantageous in that the weight is a very reliable component, which force can be easily calibrated and will remain constant over time.

The cavities are big enough to hold at least a few particles of the powder the apparatus is intended to dispense. Thus, a depth and a diameter of a cavity can be about 10µm - 5mm. The size of the cavities can be calibrated to hold a desired, suitable amount of powder.

The single or several cavities can include a bottom. Thus, normally the single or several cavities are grooves or blind holes.

There can be any suitable number of cavities in the outer surface. A single or a few sparsely distributed cavities will dispense a determined amount of powder in determined positions on a surface below. If the positions of the single or few cavities, the speed of rotation of the roller, and the relative movement between the dispensing apparatus and the surface below is synchronized properly, also such embodiments can dispense the powder in positions distributed over the surface. Preferably, the outer surface of the main section comprises several identical cavities that are evenly distributed both longitudinally and circumferentially. Thereby, the synchronization between the speed of rotation of the roller and the relative movement between the dispensing apparatus and the surface below becomes easier. However, in embodiments, the cavities can have varying size and be distributed according to other preferences over the outer surface.

According to embodiments, the several cavities constitute identical, elongated grooves, which extend in the longitudinal direction from a first longitudinal end to a second longitudinal end of the main section, and which are evenly distributed around the circumference of the main section. Thereby, when the apparatus is operated and the roller is rotated, advantageously the apparatus will dispense strings that contain substantially the same volume of powder on a surface below. Since an operator does not need to consider variations in amount of the dispensed powder in the longitudinal direction, and since the grooves all have the same angular distance between them, synchronization between rotation speed and relative movement is easier.

In such embodiments comprising longitudinal grooves, each groove can comprise a first and a second planar part surface extending in the longitudinal direction, which meet at a groove bottom, wherein the first part surface has a transverse extension mainly in a radial direction of the roller, and the second part surface has a transverse extension mainly in a tangential direction of the roller. This type of grooves is advantageous because it is easy to produce by milling or grinding of a cylindrical roller blank.

In embodiments with rollers having grooves of this type, the roller, as seen in a cross section, has a circumference in form of ratchet teeth. In other embodiments, the roller, as seen in a cross section, can have a circumference with a differently shape, such as other serrated or curved shapes.

In other embodiments, the several cavities constitute circular or elongated pits.

The scraping device can comprise at least one scraping element and a body for holding the at least one scraping element. The body can extend in the longitudinal direction and hold a plurality of scraping elements arranged in one or several rows there along. Each of the plurality of scraping elements can have an extension mainly transverse to the longitudinally direction such that the scraping device forms a brush or a brush like component. Examples of individual scraping elements are straws, strips or teeth, which can be stiff or resilient. Alternatively, the scraping element can have its main extension in the longitudinal direction, and constitute for example a blade, such as a blade of a metal sheet, preferably having a straight free edge. The scraping device can constitute such a single blade or comprise a body holding a single scraping element in form of a single blade, or, the scraping elements can be a few blades distributed along the body. Each blade can be stiff or resilient. A stiff scraping device or scraping element is considered stiff in the sense that it will essentially not bend or flex during normal operation of the apparatus. Preferably, the scraping device is arranged to press against and follow the contour of the cavities as the roller rotates, wherein the scraping device preferably is in contact with the entire inside surface of the single or several cavities.

The scraping device, for example a body of a scraping device, can be attached to the biasing mechanism at one side so that its other side is biased to contact the outer surface of the main section, wherein the scraping device can be arranged movably towards and away from the main section.

Normally, the type of scraping device matches the type of cavities. For example, scraping devices in form of blades are suitable for cavities in form of elongated grooves, while scraping devices in form of brushes are suitable for cavities in form of pits or recesses. The scarping device can have a shape that matches the contour of the single or several cavities.

According to embodiments comprising longitudinal grooves, the scraping device comprises a blade with a free edge extending in the longitudinal direction, wherein the blade is such arranged and positioned relative the main section that, when the roller is rotated and when a leading edge of each groove reaches a determined angular position, the free edge slides into that groove. A scraping device in form of such blade is especially suitable to cooperate with cavities in form of longitudinally extending grooves, because, when the roller is rotated, the powder is removed simultaneously from the groove over the whole length thereof. Thus, the powder is removed in a controlled way so that it can more easily be predicted how much and where the powder lands on a surface below. Also, the powder forms consecutive, parallel strings on the surface, which are suitable for levelling out to form layers with consistent degree of compaction.

In preferred such embodiments, the blade is a stiff blade, wherein the stiff blade is arranged movably towards and away from the main section, and wherein the stiff blade is connected to the biasing mechanism for pressing the free edge against the outer surface of the main section. Generally, the motion of a stiff, biased scraping device is more controlled so that the powder is less likely to spatter. A resilient blade or other form of resilient scraping element can cause the powder to spread more when the blade or scraping element resiliently flexes back towards its original shape when moving out of a cavity.

Preferably, the leading edge of each groove is a radially outer edge of the first part surface, and wherein, in the determined angular position, the free edge of the blade is located in the groove bottom and the plane of the blade is substantially parallel to the plane of the first part surface. Thus, when the roller is rotated, the blade goes straight into the groove in parallel with the first part surface and the free edge of the blade slides over the second part surface. Thereby, advantageously, essentially all powder in the grooves can be removed.

The container can be any type of container for storing or provisionally holding powder. Thus, the roller can form a bottom of a large storage container, or of a smaller dosing container. The container preferably has side walls extending upwards from the roller such that essentially no powder can leak past the roller and the side walls when the roller is not rotated. Instead, the powder should only exit the container though travelling in the cavities of a rotating roller. The lower edges of the side walls can be arranged to slide against the roller at the most peripheral positions of the outer surface. The lower edges of the side walls can extend at least along the main section. The container can have front and back walls connecting the side walls at two longitudinal ends of the roller, for example at the longitudinal ends of the main section. The container can have an open top, an opening in a top surface, or an opening at an upper end of a side, front or back wall. The opening can have any position or shape that is suitable for supplying powder to the container.

Preferably, the first and the second side walls converge towards the main section. Preferably, the walls form an angle with a horizontal plane that is larger than the angle of repose for the powder in question. In order to be suitable for the most common powders, this angle is preferably larger than 45°. This is advantageous because the powder will be directed towards the main section by gravity and not get stuck in the container. The container can be a hopper.

In embodiments, the lower edge of the first side wall and the lower edge of the second side wall are located in the same horizontal plane, the central rotation axis is located in a horizontal plane, and wherein the horizontal plane of the lower edges is the same or above the horizontal plane of the central rotation axis. If the central rotation axis is located above the lower edge of the side wall, a larger portion of the main section will be inside the container, and a greater force is necessary to rotate the roller in the bottom of the powder pile in the container. On the other hand, if only a small portion of the main section is located inside the container, the distance between the lower edges of the side walls will be correspondingly smaller. A small distance between the lower edges, i.e. a narrow bottom of the container, increases the risk that the powder forms arches or vaults above the roller. The horizontal plane of the rotation axis can be located at any level below the horizontal plane of the lower edges of the side walls, which still allows the single or several cavities to be filled with powder inside the container. A trade-off between low rotating forces and a low risk of empty space under an arch of powder above the roller can be a vertical distance between the horizontal plane of the lower edges of the end walls and the horizontal plane the central rotation axis that is 25% of the maximal outer diameter of the main section.

In embodiments, the side walls are located in different horizontal planes. These can be beneficial for regulating the size of the portion of the main section that is inside the container.

### Brief description of the drawings

In the following, example embodiments will be described in greater detail and with reference to the accompanying drawings, in which:
Fig. 1 is a schematic view of a powder dispensing apparatus according to a first embodiment when operated to dispense powder on a surface;
Fig. 2 shows a cavity and a scraping device of the apparatus shown in Fig. 1 in a broken-out, enlarged view;
Fig. 3 is a schematic view of an alternative embodiment of the scraping device;
Fig. 4 is a schematic view of an alternative embodiment of a biasing mechanism;
Figs. 5 and 6 are schematic views of different embodiments of the roller;
Figs. 7a - 7e are cross sectional views of different embodiments of the roller with cavities in form of longitudinal grooves.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### Detailed description

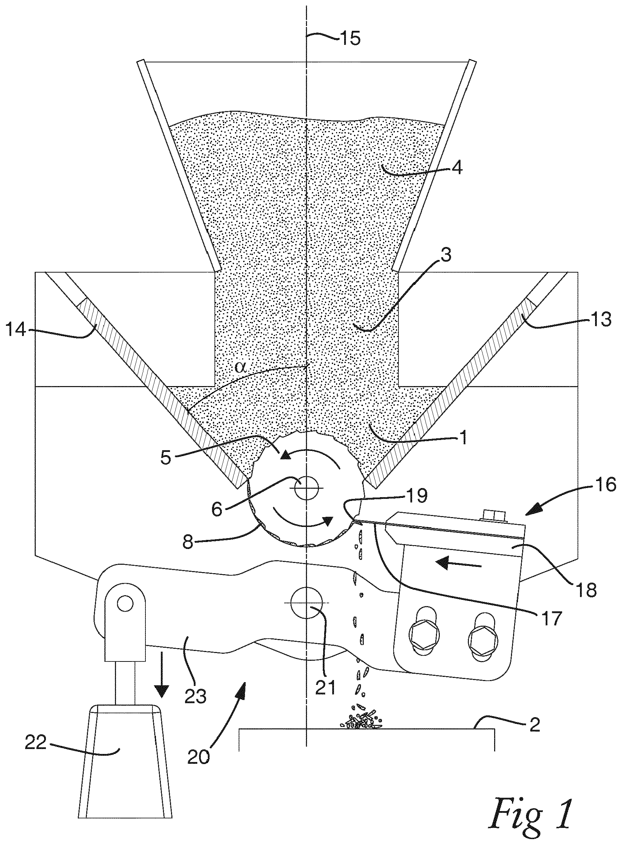

With reference to Figs. 1, 2, 5 and 7a, a first embodiment of a powder dispensing apparatus will be described. The apparatus comprises a container 1 for holding a limited amount of powder ready to be dispensed on a surface 2. The container 1 has an upper opening in form of an open top 3. There is a powder storage container 4 connected to the open top 3.

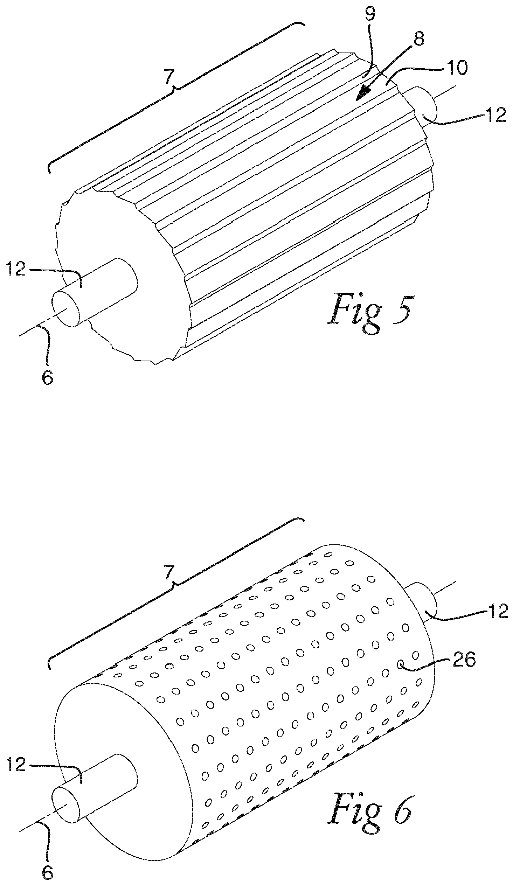

A bottom of the container 1 is formed by an elongated roller 5. The roller 5 is rotatable around central rotation axis 6 that extends in a longitudinal direction. In Fig. 1, the longitudinal direction is normal to the plane of the view. As can be seen in Fig. 5, the roller comprises a main section 7, wherein the roller has an outer surface with several cavities. The maximal outer diameter of the roller in the main section is 20 mm.

The roller 5 further comprises end sections 12 for holding the roller 5 in bearings in the powder dispensing apparatus.

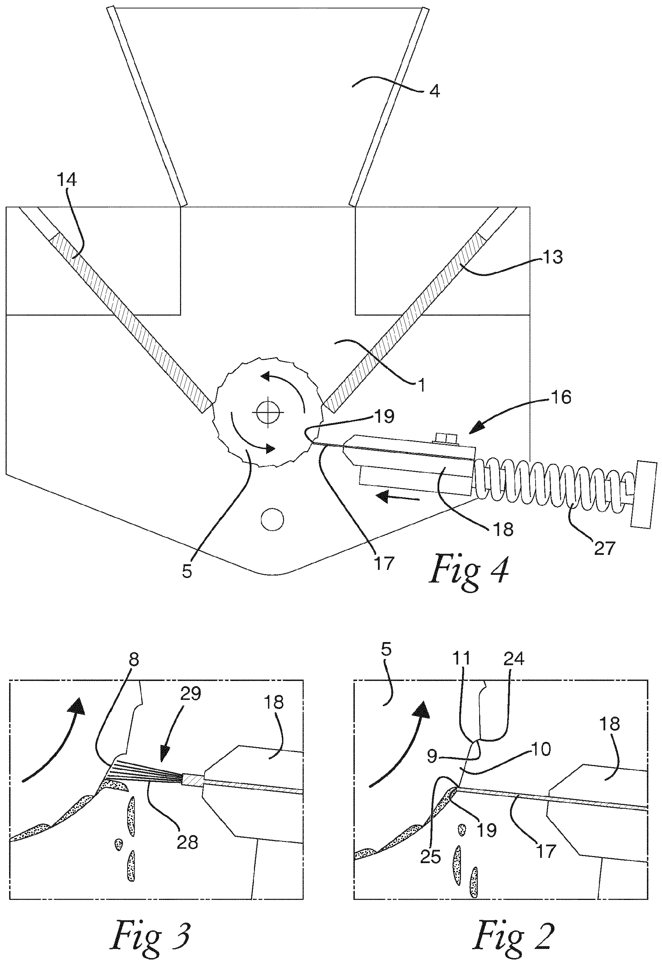

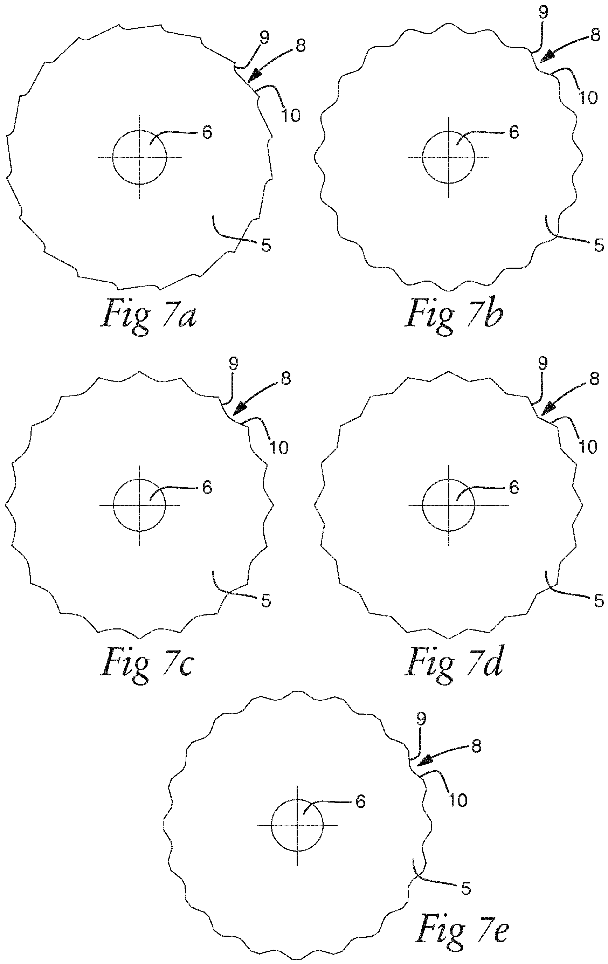

The cavities constitute identical, elongated grooves 8, which extend in the longitudinal direction from a first longitudinal end to a second longitudinal end of the main section 7, and which are evenly distributed around the circumference of the main section 7. Each groove 8 comprises a first and a second planar part surface 9, 10, c.f. Figs. 2 and 5. The part surfaces 9, 10 extend in the longitudinal direction and meet at a groove bottom 11. Due to the part surfaces 9, 10, meeting at the groove bottom, the groove bottom 11 forms an elongated narrow channel between the part surfaces 9, 10. The first part surface 9 has a transverse extension mainly in a radial direction of the roller 5, and the second part surface 10 has a transverse extension mainly in a tangential direction of the roller 5. As can be seen in Fig. 7a, evenly around the circumference distributed grooves 8 comprising such part surfaces 9, 10, result in a roller 5 that has a cross section with a circumference formed of ratchet teeth.

The container 1 comprises a first and a second side wall 13, 14 extending upwards from the roller 5 along the main section 7. The lower edges of the side walls are arranged to slide against the roller at the most peripheral positions of the outer surface so that essentially no powder can leak past the roller and the side walls 13, 14 when the roller is not rotated. The first and the second side walls13, 14 converge towards the main section 7, each forming an angle α of 45° degrees with a vertical plane 15. The lower edges of the first and second side walls 13, 14 are located in the same horizontal plane as also the central rotation axis 6 of the roller 5.

The apparatus further comprises a scraping device 16, which comprises a single scraping element in form of a blade 17 and a body 18 for holding the blade 17. The blade 17 comprises a stiff rectangular metal sheet. The scraping device 16 is located outside the container 1 and below the lower edge of the first side wall 13. The blade 17 has a free edge 19 which extends in the longitudinal direction at the main section 7.

The apparatus further comprises a biasing mechanism 20. The biasing mechanism 20 comprises a pin 21 extending in the longitudinal direction, a weight 22 and a lever 23. The weight 22 is attached to a first end of the lever 23 and the body 18 of the scraping device 16 is attached to a second end of the lever 23. The lever 23 is pivotably attached to the pin 21 in a central position. The weight 22 pulls the first end downwards and sideways towards a position vertically below the pin 21 thereby forcing the second end upwards and sideways towards a position vertically above the pin 21. This causes the free edge 19 of the scraping device 16 to press against the outer surface of the main section 7. The scraping device 16 is movably arranged in the apparatus. The scraping device 16 is movable away from the outer surface against the biasing force from the biasing mechanism 20, and towards the outer surface by the force from the biasing mechanism 20.

In the following, it will be described how the apparatus according to the first embodiment described above can be operated to dispense a fine particle size powder with low flowability on a surface. An example powder is a MIM powder with D₅₀ of 10 µm. Reference is made especially to Figs. 1 and 2.

First, a powder storage container 4 is connected to the open top 3 of container 1. Due to gravity, the powder therein falls into container 1 and down on the bottom in form of the main section 7 of roller 5, wherein the powder is directed towards the main section 7 by the converging side walls 13, 14.

Then, the roller 5 is rotated anti-clockwise around its central rotation axis 6. Due to the ratchet-teethed shape of the outer surface of the main section 7, the powder is sheared and caught in the grooves 8. As the roller 5 rotates, the powder received in the grooves 8 is held therein due to the low flowability and high adhesiveness of the powder. Thus, the powder in the grooves 8 travels with the rotating roller 5 past the second side wall 14 and around towards the scraping device 16 on the other side of the roller 5. As seen in the anti- clockwise rotation direction of roller 5, the leading edge 24 of each groove 8 is a radially outer edge of the first part surface 9 and a trailing edge 25 of each groove 8 is a radially outer edge of the second part surface 10.

Thanks to the biasing mechanism 20 pressing the blade 17 against the outer surface of the main section 7, the free edge 19 of the blade 17 contacts and presses against the outer surface. Furthermore, the scraping device 16 is arranged movably towards and away from the main section due to being connected to the biasing mechanism 20. Thus, as the roller 5 rotates, the blade 17 slides into and out of the grooves 8.

When the leading edge 24 of each groove 8 reaches the angular position shown in Fig. 2, the free edge 19 of the blade slides over the leading edge 24, into the groove 8 and approaches the groove bottom 11. When the free edge 19 is located in the groove bottom 11, the plane of the blade 17 will be parallel with the plane of the first part surface 9. During further rotation of the roller 5, the free edge 19 of the blade contacts and presses against the second part surface 10 of the groove 8 to scrape the inside of groove 8. Thereby the powder inside the groove 8 is removed and pushed over the trailing edge 25 of the second part surface 10 and it falls down on the surface 2 in form of a string extending in the longitudinal direction.

With proper synchronization between rotation speed of the roller 5 and a relative movement between the apparatus and the surface 2 below, consecutive strings of powder can be dispensed on the surface 2. These strings can in subsequent steps be spread to form a layer with consistent degree of compaction on the surface 2. Advantageously, such a layer is suitable for a binder jetting 3D printing technique for forming green bodies that are to be sintered.

In another embodiment, the roller is provided with ratchet-teeth oriented in the opposite direction, i.e. when seen in the direction of rotation, for each groove, the first part surface 9 is trailing and the second part surface 10 is leading. This can be advantageous for shearing off powder from the pile of powder in the container 1.

In embodiments, the scraping device 16 can be located below a lower edge of the second side wall 14 instead. Embodiments can also have several scraping devices 16, for example one at each side wall 13, 14. The scraping devices 16 can be arranged to scrape at different depth, different cavities or different portions of the cavities.

In Fig. 3, an alternative embodiment of the scraping device 16 is shown. The scraping device 16 of the embodiment of Fig. 3 differs from the scraping device according to the first embodiment described above in that it comprises several resilient elements in form of straws 28 attached to a body 18. The scraping device 16 according to the embodiment of Fig. 3 forms an elongated brush 29 extending in the longitudinal direction.

In Fig. 4, an alternative embodiment of a biasing mechanism 20 is shown. The biasing mechanism of the embodiment of Fig. 4 comprises a spring in form of a helical spring 27. The helical spring 27 is fixed in the dispensing apparatus at one end and attached to the body 18 of the scraping device 16 at the other end. The scraping device 16 is movably arranged towards and away from the outer surface of the main section 7. The scraping device 16 is movable towards the outer surface by the force from the spring 27, which causes the free edge 19 of the blade 17 to press against the outer surface of the main section 7.

In Fig. 6, an alternative embodiment of the roller 5 is shown. The roller 5 of the embodiment of Fig. 6 differs from the roller of the first embodiment in that the main section comprises several cavities in form of circular pits 26. The pits constitute blind holes. Such a roller is suitable in an embodiment comprising a scraping device in form of a brush as shown in Fig. 3.

In Figs. 7a - 7e cross sectional views of different embodiments of the roller with cavities in form of longitudinal grooves are shown.

In Fig. 7a, a cross section of a roller 5 according to first embodiment with ratchet teeth is shown.

In Fig. 7b, an embodiment with a sinus-like circumference is shown. This embodiment is advantageous in that the scraping device 16 will slide into and out of the grooves in a steady continuous movement. Thus, the powder is less likely to spatter.

In Fig. 7c, an embodiment of the roller having first and second part surfaces 9, 10 of equal length and a larger curved groove bottom is shown. Between the grooves, pointed ridges are formed. This embodiment is advantageous in that the pointed ridges are suitable to shear power off from the bottom of the pile in the container 1 and in that the curved bottom provides a steady, continuous movement of the scraping device. Curved groove bottoms are also advantageous with respect to removing powder since powder is less likely to get stuck.

The embodiment of Fig. 7d is similar to the embodiment of Fig. 7c, but has a narrow, sharp groove bottom. This embodiment is advantageous because it is easy to produce by milling or grinding of a cylindrical roller blank.

The embodiment of Fig. 7e is similar to the embodiment of Fig. 7b, but has capped outer portions. Thereby, the leading edge of a groove becomes sharper so that the ability to shear off powder from the bottom of the pile in the container 1 is enhanced.

## Claims

1. A powder dispensing apparatus for an additive manufacturing system, comprising a container (1), wherein the container (1) comprises
- an upper opening (3) for introducing powder,
- a bottom in form of an elongated roller (5), wherein the roller (5) is rotatable around a central rotation axis (6) that extends in a longitudinal direction, and wherein the roller (5), in a main section (7) thereof, has an outer surface comprising a single or several cavities (8, 26) distributed therein for receiving and holding powder, and
- a first and a second side wall (13, 14) extending upwards from the roller (5) along the main section,
**characterized by**
an elongated scraping device (16) extending in the longitudinal direction beside the roller (5) and below a lower edge of the first side wall (13), wherein the scraping device (16) is arranged to contact the outer surface of the roller (5) along the main section and, when the roller (5) is rotated, to slide into and out of the single or several cavities (8, 26) and thereby scrape the inside of the single or several cavities (8, 26) and remove any powder therefrom.

2. The powder dispensing apparatus according to claim 1, wherein the scraping device (16) is configured to contact the outer surface by pressing against the outer surface.

3. The powder dispensing apparatus according to claim 2, further comprising a biasing mechanism (20) for causing the scraping device (16) to press against the outer surface of the main section (7).

4. The powder dispensing apparatus according to claim 3, wherein the biasing mechanism (20) comprises a weight (22) that via a lever (23) is arranged to press the scraping device (16) against the outer surface of the main section (7).

5. The powder dispensing apparatus according to any of the claims 1 - 4, wherein the one or several cavities constitute identical, elongated grooves (8), which extend in the longitudinal direction from a first longitudinal end to a second longitudinal end of the main section (7), and which are evenly distributed around the circumference of the main section (7).

6. The powder dispensing apparatus according to claim 5, wherein each groove (8) comprises a first and a second planar part surface (9, 10) extending in the longitudinal direction, which meet at a groove bottom (11), wherein the first part surface(9) has a transverse extension mainly in a radial direction of the roller (5), and the second part surface (10) has a transverse extension mainly in a tangential direction of the roller (5).

7. The powder dispensing apparatus according to claims 5 or 6, wherein the scraping device (16) comprises a blade (17) with a free edge (19) extending in the longitudinal direction, wherein the blade (17) is such arranged and positioned relative the main section (7) that, when the roller (5) is rotated and when a leading edge of each groove (8) reaches a determined angular position, the free edge (19) slides into that groove (8).

8. The powder dispensing apparatus according to any of the claims 3 or 4, and claim 7, wherein the blade (17) is a stiff blade (17), wherein the stiff blade (17) is arranged movably towards and away from the main section (7), and wherein the stiff blade (17) is connected to the biasing mechanism (20) for pressing the free edge (19) against the outer surface of the main section (7).

9. The powder dispensing apparatus according to claims 7 and 8, wherein the leading edge (24) of each groove (8) is a radially outer edge of the first part surface, and wherein, in the determined angular position, the free edge (19) of the blade (17) is located in the groove bottom (11) and the plane of the blade (17) is substantially parallel to the plane of the first part surface (9).

10. The powder dispensing apparatus according to any of the claims 2 - 7, wherein the scraping device (16) comprises at least one resilient element (28) for inherently pressing against the outer surface.

11. The powder dispensing apparatus according to any of the claims 1 - 10, wherein
- the lower edge of the first side wall (13) and the lower edge of the second side wall (14) are located in the same horizontal plane,
- the central rotation axis of the roller (5) is located in a horizontal plane, and wherein
- the horizontal plane of the lower edges is the same or above the horizontal plane of the central rotation axis.

12. The powder dispensing apparatus according to any of the claims 1 - 11, wherein the first and the second side walls (13, 14) converge towards the main section (7).
